# EUROPEAN PATENT SPECIFICATION

(11) **EP 3 836 487 B1**
(45) Date of publication and mention of the grant of the patent: **25.06.2025**
(21) Application number: 19846490.1
(22) Date of filing: 23.07.2019
(51) Int. Cl.: H04L 12/46, H04L 9/40

(54) **INTERNET ACCESS BEHAVIOR MANAGEMENT SYSTEM AND DEVICE**
SYSTEM UND VORRICHTUNG ZUR VERWALTUNG DES INTERNETZUGANGSVERHALTENS
SYSTÈME ET DISPOSITIF DE GESTION DE COMPORTEMENT D'ACCÈS INTERNET

(30) Priority: 07.08.2018 CN 201810892902
(43) Date of publication of application: 16.06.2021
(73) Proprietor: Sangfor Technologies Inc., Shenzhen, Guangdong 518055 (CN)
(72) Inventor: ZHANG, Fei, Shenzhen, Guangdong 518055 (CN); LIANG, Jingbo, Shenzhen, Guangdong 518055 (CN)
(74) Representative: Müller Schupfner & Partner Patent- und Rechtsanwaltspartnerschaft mbB (Muc)
(86) International application number: PCT/CN2019/097225
(87) International publication number: WO 2020/029793

(56) References cited:
- CN-A- 105 634 998
- CN-A- 105 634 998
- CN-A- 107 294 954
- CN-A- 107 294 954
- CN-A- 107 634 884
- US-A1- 2012 233 668
- US-A1- 2013 125 124
- US-A1- 2015 139 238
- US-A1- 2016 182 336
- US-A1- 2017 078 248
- US-A1- 2017 099 188

## Description

### TECHNICAL FIELD

The present disclosure generally relates to the technical field of cloud computing, and particularly, to a system and device for Internet access behavior management.

### BACKGROUND

In a certain application scenario, it is necessary to monitor and control Internet access behavior of a user, that is, to implement Internet access behavior management of the user.

A traditional function of Internet access behavior management is usually integrated in a network device. The network device is deployed at an export of a network used by an Internet device of the user to implement the management of the Internet access behavior. However, a cost of the network device integrated with the function of Internet access behavior management is usually relatively high. When performing Internet access behavior management for users in multiple different networks, it is necessary to configure the network device integrated with the function of Internet access behavior management for each network. The more network devices with the function of Internet access behavior management, the higher the cost of Internet access behavior management. Moreover, it is less flexible to integrate the Internet access behavior management on the network device.

Patent Applicant US2017/078248A1 discloses interconnecting external networks with overlay networks in a shared computing environment. It includes: obtaining, by one or more processor, data from a virtual network of a tenant and an identifier of the tenant, where the virtual network of the tenant is one of at least two virtual networks in a shared computing environment where the at least two virtual networks overlay a physical network. Based on obtaining the identifier of the tenant, the method includes setting, by one or more processor, the identifier in metadata of the data and based on the identifier in the metadata, identifying, by the one or more processor, a network connection associated with the tenant. The method also includes identifying, by the one or more processor, a policy of the network connection and processing the data with the policy to create processed data and transmitting, by the one or more processor, the processed data through the network connection.

Patent Application US2017/099188A1 discloses policy-driven switch overlay bypass in a hybrid cloud network environment. Network policies can be used to optimize the flow of network traffic between virtual machines (VMs) in a hybrid cloud environment. One or more policies can drive a virtual switch controller, a hybrid cloud manager, a hypervisor manager, a virtual switch, or other orchestrator to create one or more direct tunnels that can be utilized by a respective pair of VMs to bypass the virtual switch and enable direct communication between the VMs. The virtual switch can send the VMs network and security policies to ensure that these policies are enforced. The VMs can exchange security credentials in order to establish the direct tunnel. The direct tunnel can be used by the VMs to bypass the virtual switch and allow the VMs to communicate with each other directly.

Patent Application US2016/182336A1 discloses hybrid cloud network monitoring system for tenant use. Network traffic in a cloud computing system is monitored in response to a request to capture network traffic of a tenant port of a first virtual machine (VM) executing in the cloud computing system, wherein the first VM is associated with a first tenant organization different from a second organization managing the cloud computing system. A decapsulating VM having a first network interface and a second network interface is instantiated, wherein the decapsulating VM is inaccessible to the first tenant organization. An encapsulated port mirroring session from the tenant port of the first VM to the first network interface of the decapsulating VM is then established. A plurality of packets comprising captured network traffic received via the encapsulated port mirroring session are decapsulated, and the captured network traffic is forwarded via the second network interface of the decapsulating VM to a sniffer VM.

### SUMMARY

An object of the present disclosure is to provide a system, device, and method for Internet access behavior management, to solve technical problems of high cost and poor flexibility of Internet access behavior management. The invention is set out in the appended set of claims.

The system for Internet access behavior management provided in the embodiments of the present disclosure creates the mirror instance for Internet access behavior management for each tenant, such that the Internet access data of each tenant can be processed independently. The Internet access data between tenants are isolated from each other, thereby improving security. Furthermore, the mirror instance for Internet access behavior management corresponding to the tenant can be flexibly added or deleted, thus improving flexibility of Internet access behavior management.

### BRIEF DESCRIPTION OF THE DRAWINGS

In order to more clearly explain the embodiments of the present invention or the technical solutions in the prior art, the drawings used in the description of the embodiments or the prior art will be briefly introduced below. Obviously, the drawings in the following description are merely It is an embodiment of the present invention. For those of ordinary skill in the art, other drawings can be obtained according to the provided drawings without paying creative labor.
Figure 1 is a schematic diagram of a system for Internet access behavior management according to an embodiment of the present disclosure
Figure 2 is a block diagram of the system for Internet access behavior management according to an embodiment of the present disclosure;
Figure 3 is a schematic diagram of an instance of the system for Internet access behavior management according to an embodiment of the present disclosure;
Figure 4 is a schematic diagram of an operation interface for adding a new tenant according to an embodiment of the present disclosure;
Figure 5 is a schematic diagram of an operation interface for canceling an account according to an embodiment of the present disclosure;
Figure 6 is a schematic diagram of an operation interface for adjusting a performance parameter of the system for Internet access behavior management according to an embodiment of the present disclosure;
Figure 7 is another schematic diagram of the system for Internet access behavior management according to an embodiment of the present disclosure;
Figure 8 is another schematic diagram of an instance of a system for Internet access behavior management according to an embodiment of the present disclosure;
Figure 9 is a flow chart of a method for Internet access behavior management according to an embodiment of the present disclosure;
Figure 10 is a flow chart of the method for Internet access behavior management according to an embodiment of the present disclosure;
Figure 11 is a schematic diagram of a method for managing the mirror instance for Internet access behavior management according to an embodiment of the present disclosure;
Figure 12 is a structural schematic diagram of a device for Internet access behavior management according to an embodiment of the present disclosure;
Figure 13 is another structural schematic diagram of the device for Internet access behavior management according to another embodiment of the present disclosure; and
Figure 14 is a schematic diagram of a device for managing the mirror instance for Internet access behavior management according to an embodiment of the present disclosure.

### DETAILED DESCRIPTION

As described in the background, if there is a need to manage the Internet access behavior of a device in the network, the network device integrated with the function of Internet access behavior management needs to be set up at the export of the network. If there are multiple networks that need to be managed, multiple network devices need to be set correspondingly, which results in high cost. In order to solve this problem, the inventor discovers that the function of Internet access behavior management can be realized in a form of software.

One way to realize the function of Internet access behavior management in the form of software is to use a cloud platform to achieve the Internet access behavior management. By building a module that can receive Internet access data and a module that can analyze and process the received Internet access data on the cloud platform, a purpose of managing the device in the network according to a result of the analysis and processing can be realized. However, if there are multiple networks that need to be managed, the analysis and processing module must analyze and process the Internet access data of the multiple networks, which may pose certain security risks.

In order to solve the above technical problem, a system for Internet access behavior management is provided in the present disclosure. A mirror instance for Internet access behavior management corresponding to each tenant is created on the cloud platform, and the mirror instance of Internet access behavior management can realize service of Internet access behavior management for corresponding tenant. Internet access data of the tenant is distributed, by means of a tenant distributor, to the mirror instance for Internet access behavior management corresponding to the tenant. Said method creates the mirror instance for each tenant to implement the service of Internet access behavior management, and does not need the network device integrated with the function of Internet access management, thereby reducing the cost of Internet access behavior management. In addition, the Internet access data of each tenant is processed by an independent mirror instance for Internet access behavior management, the Internet access data between tenants are isolated from each other, thereby improving security. Furthermore, the mirror instance for Internet access behavior management corresponding to the tenant can be flexibly added or deleted, thus improving flexibility of Internet access behavior management.

The technical solution according to the embodiments of the present application will be described clearly and completely as follows in conjunction with the accompany drawings in the embodiments of the present application, so that objectives, characteristics and advantages of the present application can be more obvious. It is obvious that the described embodiments are only a part of the embodiments according to the present application, rather than all of the embodiments. All the other embodiments obtained by those skilled in the art based on the embodiments in the present application without any creative work belong to the scope of protection of the present application.

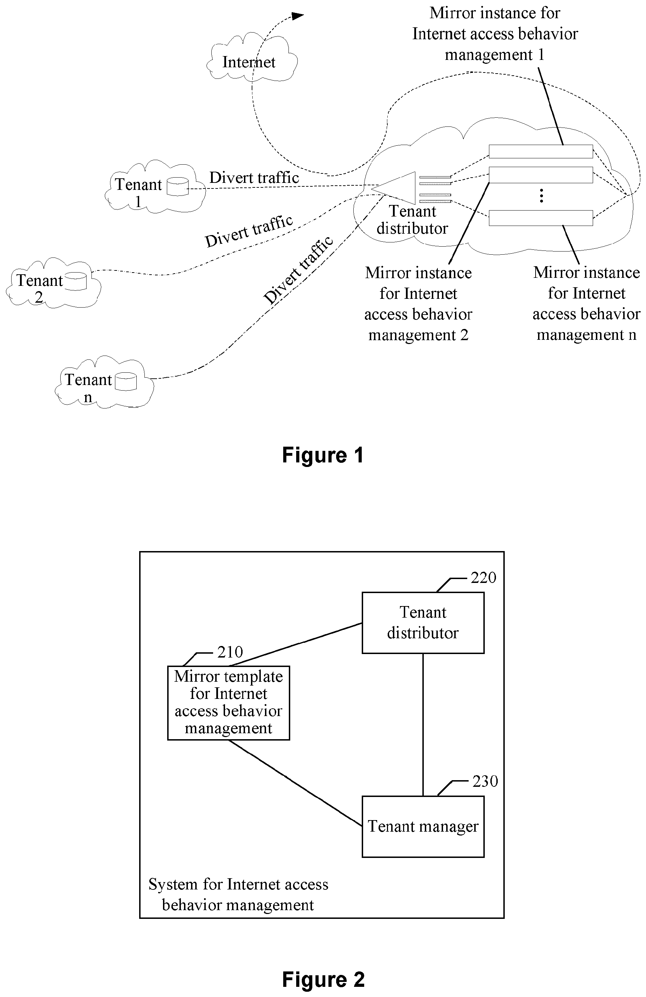

Figure 1 is a schematic diagram of a system for Internet access behavior management disclosed the present disclosure. A tenant manager in the system opens an account for a tenant when receives a request of the tenant for opening an account, and uses a mirror template for Internet access behavior management to create a mirror instance for Internet access behavior management for the tenant.

As illustrated in Figure 1, there are multiple tenants, and the Internet access data of the tenants is distributed to the tenant distributor. After receiving the Internet access data sent by a tenant, the tenant distributor distributes the Internet access data to the mirror instance for Internet access behavior management corresponding to the tenant. The mirror instances for Internet access behavior management analyze and process the Internet access data to realize the service of Internet access behavior management of the tenants. The service of Internet access behavior management may include Internet browsing management, Internet outbound management, Internet application management, Internet traffic management, and Internet access behavior analysis.

In the embodiment illustrated in Figure 1, the mirror instance for Internet access behavior management can be deployed on a public cloud platform, or deployed in a machine room of an Internet Data Center IDC, or deployed on a server on a local network of the user, or deployed in a private cloud platform. The public cloud platform may be a public cloud platform provided by a traditional telecom infrastructure operator, such as China Mobile, China Unicom, or China Telecom. The public cloud platform may also be a local cloud computing platform led by government. The public cloud platform may also be Alibaba Cloud or Tencent Cloud.

Figure 2 is a block diagram of a system for Internet access behavior management according to an embodiment of the present disclosure. Internet access behavior management, as a security-as-a-service product under a SaaS service mode, has a resource pooling capability, supports elastic scalability, and is responsible for identifying and controlling Internet traffic and ensuring Internet business security. Moreover, a customer may be divided into multiple tenants according to requirements. Internet traffic of each tenant is processed by an independent mirror instance for Internet access behavior management, and the Internet access data between tenants are isolated from each other,

As illustrated in Figure 2, the system for Internet access behavior management includes: a mirror template 210 for Internet access behavior management, a tenant distributor 220, and a tenant manager 230.

The mirror template 210 for Internet access behavior management is deployed in the local network of the user, or deployed in the machine room of the IDC, or deployed in the public cloud platform.

In a possible implementation of the present disclosure, the tenant distributor 220 is deployed on the cloud platform, or the tenant distributor 220 is deployed in a gateway where the tenant is located.

The mirror template 210 for Internet access behavior management is configured to create the mirror instance for Internet access behavior management corresponding to each tenant, to implement the service of Internet access behavior management of the tenant by the mirror instance for Internet access behavior management corresponding to the tenant.

In the embodiment of this application, one tenant corresponds to one administrative management unit. For example, the tenant may be a company organization, or the tenant may be a subsidiary of a group organization, or the tenant may be a department agency of the company organization. The customer may be divided into multiple tenants according to requirements.

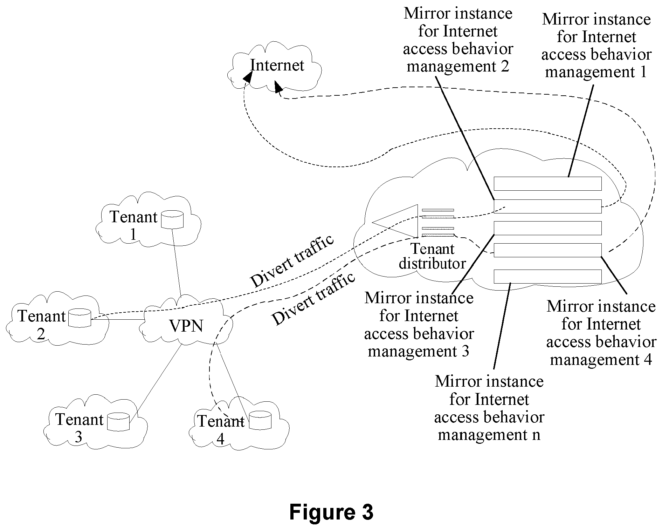

For a company or a group with multiple branches, each branch has a separate Internet link, and can independently access the Internet. Each branch has a need for self-management of Internet access behavior. In this application scenario, each branch of the company or the group is regarded as an independent administrative unit, that is, one tenant is created for each branch. The Internet access data of an export of the branch may be diverted to the system for Internet access behavior management for processing. For example, in the example illustrated in Figure 3, tenants 1 to 4 all belong to the same private network. The tenants 1 to 4 are different departments within the company, or different subsidiaries within the same group. The Internet access data of each tenant is distributed to the tenant distributor, separately. The tenant distributor distributes the Internet access data of different tenants to different mirror instances for Internet access behavior management for analysis and processing. For example, the Internet access data of tenant 2 is sent by the tenant distributor to mirror instance 2 for Internet access behavior management for processing, and the Internet access data of tenant 4 is sent by the tenant distributor to mirror instance 4 for Internet access behavior management for processing. The mirror instance 2 for Internet access behavior management and the mirror instance 4 for Internet access behavior management send the processed data to the Internet.

As the security-as-a-service product under the SaaS service mode, the system for Internet access behavior management has a mode of multi-tenant service, and uses a management rule included in the mirror instance for Internet access behavior management to implement control plane isolation, traffic isolation, authority isolation, security policy isolation, and log isolation between tenants.

### 1) Control Plane Isolation

In the SaaS service mode, the system for Internet access behavior management, as the security-as-a-service, operates in the mode of multi-tenant. By configuring separate mirror instances for Internet access behavior management for multiple tenants, configurations of different tenants are saved in different mirror instances for Internet access behavior management to achieve a function of control plane isolation.

### 2) Internet Access Data Isolation

In the SaaS service mode, the system for Internet access behavior management, as the security-as-a-service, operates in the mode of multi-tenant. When different tenants use the system for Internet access behavior management at the same time, the mirror instance for Internet access behavior management corresponding to each tenant only process the Internet access data of the tenant to realize a function of the Internet access data isolation.

The tenant distributor distributes the Internet access data of different tenants to the corresponding mirror instance for Internet access behavior management of each tenant.

### 3) Authority Isolation

In the SaaS service mode, the system for Internet access behavior management, as the security-as-a-service, operates in the mode of multi-tenant. When different tenants use the system for Internet access behavior management at the same time, the mirror instance for Internet access behavior management corresponding to each tenant is used to realize a function of authority isolation.

### 4) Security Policy Isolation

In the SaaS service mode, the system for Internet access behavior management, as the security-as-a-service, operates in the mode of multi-tenant. When different tenants use the system for Internet access behavior management at the same time, the different tenant's own security policy is configured and operated by using different mirror instances for Internet access behavior management. The security policies are isolated between tenants and do not affect each other.

### 5) Log Isolation

In the SaaS service mode, the system for Internet access behavior management, as the security-as-a-service, operates in the mode of multi-tenant. When different tenants use the system for Internet access behavior management at the same time, the different tenant's own log system is maintained by using different mirror instances for Internet access behavior management. Log information is stored in an independent disk space of the tenant mirror.

The tenant distributor 220 is configured to receive Internet access data of the tenant and distribute the Internet access data to the corresponding mirror instance for Internet access behavior management of the tenant.

A mirror instance for Internet access behavior management is created for each tenant. The tenant distributor 220 distributes the Internet access data of a certain tenant to the mirror instance for Internet access behavior management corresponding to the tenant for processing.

In an embodiment of the present application, the tenant distributor 220 determines, according to a tenant identifier corresponding to the Internet access data, the mirror instance for Internet access behavior management corresponding to the tenant identifier.

For example, a distribution rule is configured in the tenant distributor 220. The distribution rule includes a correspondence relationship between the tenant identifier and the mirror instance for Internet access behavior management. After receiving the Internet access data of the tenant, the tenant distributor 220 obtains the tenant identifier corresponding to the Internet access data, finds the mirror instance for Internet access behavior management corresponding to the tenant identifier from the distribution rule, and sends the Internet access data of the tenant to the mirror instance for Internet access behavior management.

The tenant manager 230 is configured to provide the tenant with, but not limited to, account opening service, dynamic expansion service, and account cancellation service.

### 1) Account Opening Service

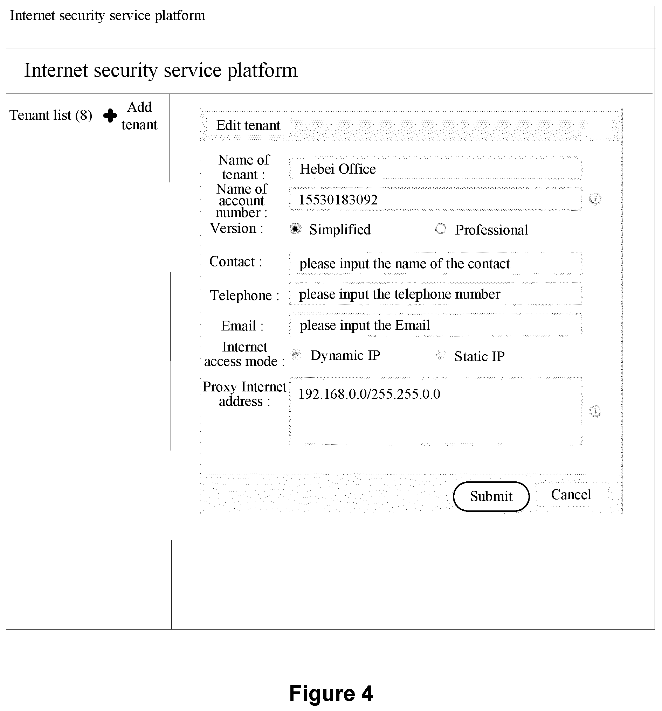

When a new tenant is to be added, a new tenant is created, and the tenant manager 230 uses the mirror template 210 for Internet access behavior management to create an the mirror instance for Internet access behavior management for the tenant; and establishes a connection between the mirror instance for Internet access behavior management and the tenant distributor 220, so that the tenant distributor 220 can send the Internet access data sent by the new tenant to the mirror instance for Internet access behavior management corresponding to the tenant. Where, an operation interface of adding new tenant may be as illustrated in Figure 4.

### 2) Account Cancellation Service

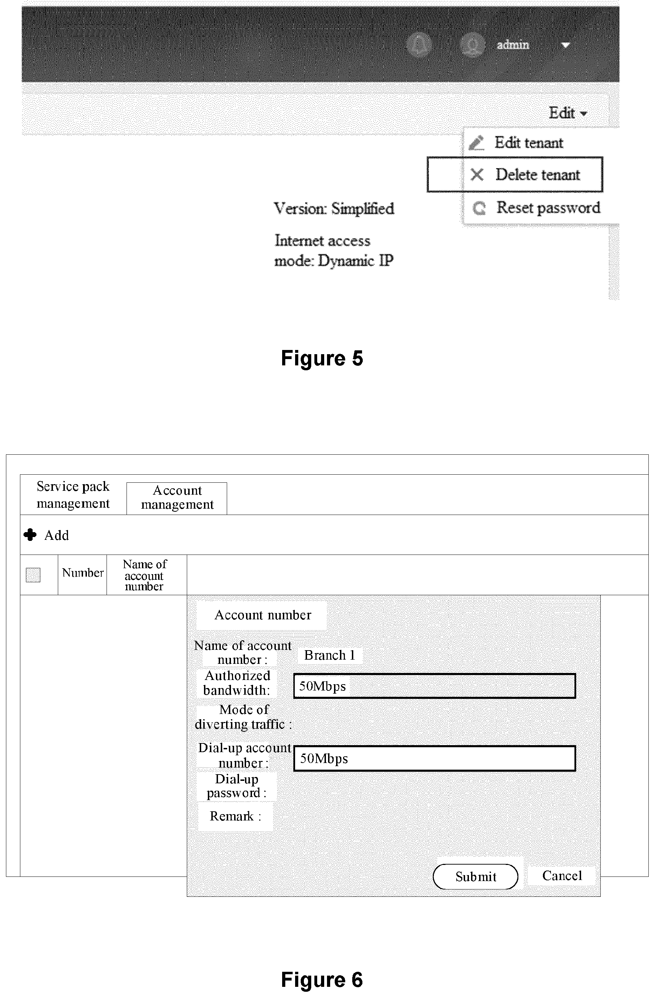

When a tenant is to be cancelled, the tenant manager 230 releases a cloud platform resource occupied by the mirror instance for Internet access behavior management of the tenant. Where, an operation interface of canceling the account may be as illustrated in Figure 5.

### 3) Dynamic Expansion Service

After opening the account for the tenant, performance of the mirror instance for Internet access behavior management may be dynamically adjusted according to a bandwidth of the tenant. If a bandwidth demand of the tenant becomes smaller, the bandwidth performance parameter of the mirror instance for Internet access behavior management is adjusted to be lower; if the bandwidth demand of the tenant becomes larger, the bandwidth performance parameter of the mirror instance for Internet access behavior management is adjusted to be higher.

In a possible implementation of the present application, the bandwidth of the tenant may be actively reported by the tenant to the tenant manager 230, or may be obtained by analyzing the Internet access data of the tenant by the mirror instance for Internet access behavior management.

For example, when the new tenant is created, the bandwidth of the tenant is 20M, and after a period of time, the bandwidth of the tenant is expanded to 50M, then the bandwidth of the mirror instance for Internet access behavior management is adjusted to 50M. The mirror instance for Internet access behavior management may dynamically adjust its resource configuration to support the bandwidth performance of 50M. For example, an operation interface for adjusting the performance parameter of the system for Internet access behavior management may be as illustrated in Figure 6.

The operation interfaces illustrated in Figures 4 to 6 may be an operation interface of the tenant manager in the system for Internet access behavior management. An administrator may log in to the system and implement a function of tenant management through the operation interface of the tenant manager.

Of course, in other embodiments of the present application, other performance parameter of the mirror instance for Internet access behavior management may be adjusted.

The system for Internet access behavior management provided in the embodiment of the present disclosure creates the mirror instance for Internet access behavior management for each tenant, such that the Internet access data of each tenant can be processed independently. The Internet access data between tenants are isolated from each other, thereby improving security. Furthermore, the mirror instance for Internet access behavior management corresponding to the tenant can be flexibly added or deleted, thus improving flexibility of Internet access behavior management.

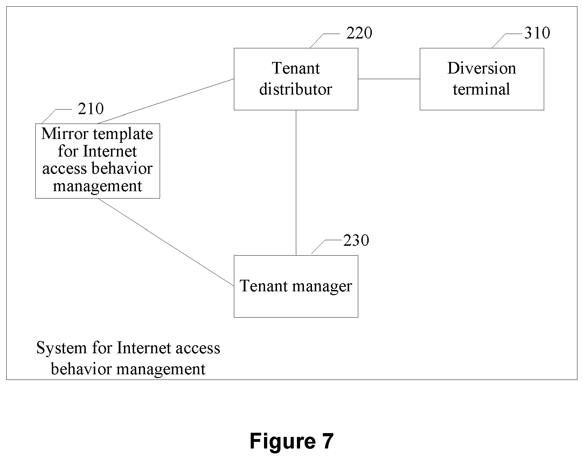

Figure 7 is another schematic diagram of the system for Internet access behavior management according to an embodiment of the present disclosure. In this embodiment, relevant content of a diversion terminal is added on the basis of the system illustrated in Figure 2.

The mirror instance for Internet access behavior management is a virtual device, unlike a hardware device. A hardware security device is usually deployed on the network of the tenant. For example, the hardware security device is usually deployed at the export of the network of the tenant as a bridge or a gateway. The Internet traffic of the tenant flows through the bridge or the gateway. Therefore, the Internet access data of the tenant can be controlled. However, the mirror instance for Internet access behavior management may be deployed on the private cloud platform of the tenant or on the public cloud platform (such as Alibaba Cloud, Amazon Cloud, or Tencent Cloud). Under normal circumstances, the Internet access data of the tenant does not flow through the mirror instance for Internet access behavior management. If there is a need to control the Internet access data of the tenant through the mirror instance for Internet access behavior management, the Internet access data of the tenant needs to be diverted to the mirror instance for Internet access behavior management.

The diversion terminal 310 is configured to divert the Internet access data of the tenant to the tenant distributor 220 according to a pre-configured diversion tunnel.

In an application scenario where the mirror instance for Internet access behavior management is deployed in the private cloud, the diversion terminal 310 may be a common router.

In an application scenario where the mirror instance for Internet access behavior management is deployed at a remote end (i.e., the public cloud), the diversion terminal 310 is a router that supports a tunneling protocol. The tunneling protocol includes but not limited to Layer Two Tunneling Protocol L2TP, Generic Routing Encapsulation GRE protocol, Virtual Private Dial-up Networks VPDN protocol.

An L2TP tunnel, a GRE tunnel or a VPDN tunnel is established on a network egress router of the tenant to directly divert the Internet access data of the tenant to the tenant distributor 220.

If only part of the Internet access data of the tenant needs to be diverted to the tenant distributor, policy based routing PBR may be started on the network egress router of the tenant. When configuring the PBR, only the Internet access data of a designated IP network segment is sent to the L2TP tunnel, GRE tunnel or VPDN tunnel, so that the mirror instance for Internet access behavior management corresponding to the tenant only controls designated Internet access data of the tenant.

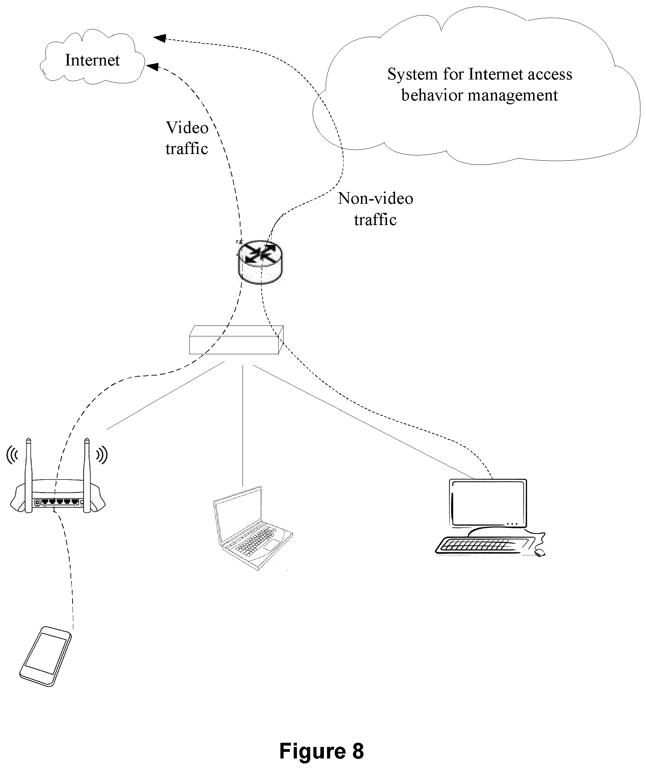

For example, in an example illustrated in Figure 8, only non-video traffic data in the Internet access data of the tenant is controlled. By configuring the PBR, only the non-video traffic data of the tenant is diverted to the system for Internet access behavior management. No video traffic data needs to be diverted to the system for Internet access behavior management.

In an embodiment of the present application, the tenant identifier based on which the tenant distributor 220 distributes the Internet access data may be a tenant account number, for example, an account number assigned to the tenant when the tenant is created. The account number is carried in the Internet access data of the tenant. The tenant distributor 220 extracts the tenant account number from the Internet access data, and sends the Internet access data to the mirror instance for Internet access behavior corresponding to the tenant account number.

In another embodiment of the present application, the tenant identifier may be an IP address of an intranet used by the tenant.

In an application scenario of the present application, the Internet access data of the tenant is sent to the tenant distributor 220 through the L2TP tunnel. A Tunnel ID and a Session ID in a L2TP protocol message uniquely correspond to an L2TP dial-up account number. After the L2TP dial-up succeeds, the tenant distributor 220 distinguishes different tenants according to the Tunnel ID and the Session ID. That is, the Tunnel ID and the Session ID are used as the tenant identifier.

In another application scenario of the present application, the Internet access data of the tenant is sent to the tenant distributor 220 through the VPDN tunnel. VPDN is based on the L2TP protocol. Therefore, the VPDN tunnel, like the L2TP tunnel, also uses the Tunnel ID and Session ID as the tenant identifier.

In another application scenario of this application, the Internet access data of the tenant is sent to the tenant distributor 220 through the GRE tunnel. The tenant is distinguished according to a secret key KEY in a GRE protocol message, that is, the secret key KEY is used as the tenant identifier.

The system for Internet access behavior management provided in this embodiment diverts the Internet access data of the tenant into the system for Internet access behavior management through the diversion terminal, and then system for Internet access behavior management controls the Internet access data of the tenant to ensure security of Internet access business.

The mirror instance for Internet access behavior management described in the foregoing embodiment may also implement the following functions: application control, P2P application identification, bandwidth management, content filtering, HTTPS encryption filtering, online user management, and identification and authentication.

### 1) Application Control

Internet access behavior management, as the security-as-a-service product under the SaaS service mode, has the following functions in a serial access mode:
a) correctly identifying current mainstream network applications. The current mainstream network applications include but not limited to standard application protocols, chat software, P2P, online games, online TV, stock trading software, streaming media, and hidden danger services; and
b) controlling the current mainstream network applications based on conditions such as IP addresses, users, groups, and time periods.

### 2) P2P Application Identification

Internet access behavior management, as the security-as-a-service product under the SaaS service mode, has a Peer-to-Peer (P2P) application identification function, searches for a corresponding intranet IP port based on a received data packet, and sets a port counter and a set value of the counter. When the number of User Datagram Protocol (UDP) connections that are simultaneously online with the port reaches the set value, it is determined that a connection of the data packet is a P2P application connection. The number of UDP connections that are simultaneously online with the port can be counted through the port counter.

### 3) Bandwidth Management

Internet access behavior management, as the security-as-a-service product under the SaaS service mode, the system should manage (such as restrict, guarantee, and priority set) bandwidth based on conditions such as IP address, users, groups, time periods, and application protocols in the serial access mode. Based on a bandwidth occupancy rate and a bandwidth quota corresponding to the data transmission channel, a change speed of the bandwidth quota is adjusted according to a relationship between the bandwidth occupancy rate and a threshold interval of the bandwidth occupancy rate, such that the bandwidth resources can be used more reasonable, thereby improving bandwidth utilization.

### 4) Content Filtering

Internet access behavior management, as the security-as-a-service product under the SaaS service mode, should filter the following network behaviors in the serial access mode:
email sending and receiving, web chat, HTTP file transfer, HTTPS encrypted web access, FTP file transfer, remote terminal protocol TELNET, form submission, and search engine keywords, where FTP represents File Transfer Protocol.

### 5) HTTPS Encryption Filtering

Internet access behavior management, as the security-as-a-service product under the SaaS service mode, should have a function of HTTPS encrypted traffic audit, and may extract a SNI server name indication field from a connection request data packet sent by the user, and determine a domain name of the website to be visited from the extracted SNI server name indication field. If there is no SNI server name indication field in the connection request packet, the website certificate information in the connection request packet is obtained, and the obtained website certificate information is parsed to determine the domain name of the website to be visited. If the determined website domain name matches a keyword, the connection request packet is intercepted to achieve a purpose of website filtering.

### 6) Online User Management

Internet access behavior management, as the security-as-a-service product under the SaaS service mode, should implement the following functions under serial access and bypass monitoring modes:
a) a function of managing Internet access users, and provide management functions such as creating, modifying and deleting.
b) a function of identifying and authenticating Internet access users. The following two or more modes should be used to authenticate the Internet access users:
   IP/MAC binding, gateway WEB authentication, AD domain transparent authentication, LDAP authentication, RADIUS authentication, POP3 authentication, ESMTP authentication, SOCKS authentication, and PPPoE authentication account identification.

Where, AD represents Active Directory; LDAP represents Lightweight Directory Access Protocol; RADIUS represents Remote Authentication Dial In User Service; POP3 represents Post Office Protocol-Version 3; ESMTP represents Extended SMTP; SOCKS represents Protocol for sessions traversal across firewall securely; and PPPoE represents Point to Point Protocol over Ethernet.

### 7) Identification and Authentication

### a) Timing of authentication

Before the user is authenticated, the system should identify the user and grant corresponding permissions.

The system should successfully authenticate each user before allowing the user to perform any operation.

### b) User attribute definition

The system should save a security attribute table for each user. Content of the attribute table includes but not limited to: user ID authorization information or user group information, and other security attributes.

### c) Authentication failure processing

When the user authentication fails up to a specified number of times, the system should take measures to prevent the user from continuing to try to authenticate and generate an audit log for relevant information.

In an embodiment of the present application, the system for Internet access behavior management provided in the foregoing embodiment may further include an authentication access module, and the authentication access module should have the following functions:
Internet access behavior management, as the security-as-a-service product under the SaaS service mode, should have dual-stack authentication of IPv4 and IPv6. When a dual-stack host initiates an IPv6 connection request, an HTTP redirection command is replied to the dual-stack host. A connection of the dual-stack host is redirected to an IPv4 authentication page generated by the gateway by redirection of the HTTP protocol. The dual-stack host initiates an IPv4 connection request according to the HTTP redirection command. A destination address of the IPv6 connection is saved in the redirected IPv4 authentication page. The IPv4 connection request is authenticated.

In a possible implementation manner of the present application, the authentication access module may be integrated in the tenant distributor, or the authentication access module may be a separate module independent of the tenant distributor.

In another embodiment of the present application, the system for Internet access behavior management provided in the foregoing embodiment may further include a link selection module. The link selection module has the following functions.

Internet access behavior management, as the security-as-a-service product under the SaaS service model, should have a function of link routing. After the accessing user is successfully authenticated, an authentication method and a user attribute are determined based on an IP address of the accessing user extracted from the data packet. A line corresponding to the accessing user is matched based on the authentication method and the user attribute. The data packet is sent through a network export corresponding to the line, thereby realizing a more flexible routing method.

In a possible implementation manner of the present application, the link selection module may be integrated in the diversion terminal, or the link selection module may be a separate module independent of the diversion terminal.

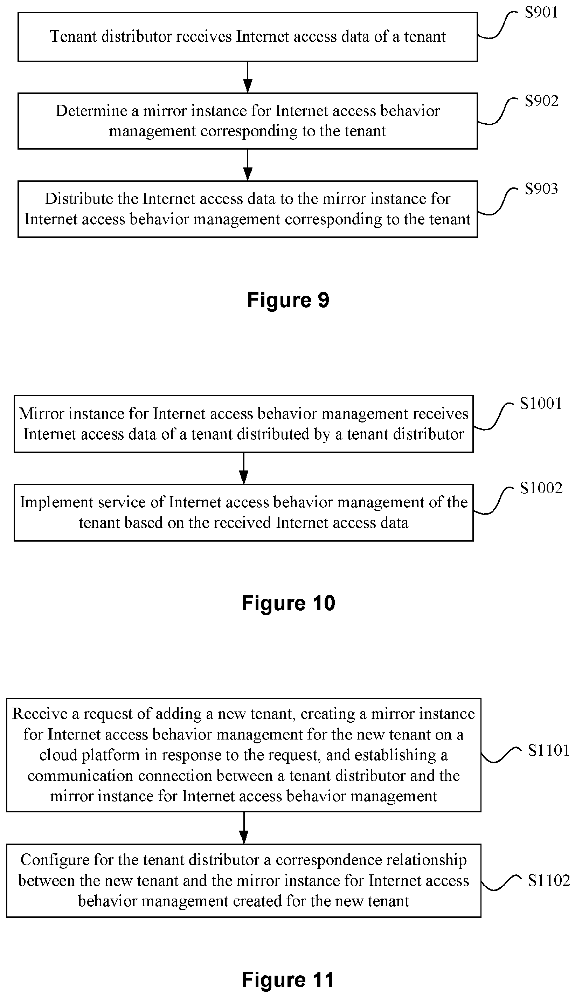

A method for Internet access behavior management, which is applied to the tenant distributor in the system for Internet access behavior management disclosed in the above embodiment, is further provided in this application. A process of this method is illustrated in Figure 9, including steps S901 to S903.

In step S901, the tenant distributor receives the Internet access data of the tenant.

A process of receiving the Internet access data by the tenant distributor refers to a process of diverting the Internet access data of the tenant to the tenant distributor. In order to implement this process, a diversion tunnel between the tenant and the tenant distributor needs to be configured in advance, and the Internet access data of the tenant is transmitted to the tenant distributor through the diversion tunnel. A router of the tenant is set to enable PBR, and distributes the Internet access data to an interface of the pre-configured diversion tunnel, and then transmits the Internet access data to the tenant distributor through the diversion tunnel.

The diversion tunnel in this embodiment may be the L2TP tunnel, the GRE tunnel or the VPDN tunnel.

In step S902, the mirror instance for Internet access behavior management corresponding to the tenant is determined.

In this embodiment, the tenant distributor determines the corresponding mirror instance for Internet access behavior management by acquiring the tenant identifier corresponding to the Internet access data.

The tenant identifier may be the tenant account number, for example, the account number assigned to the tenant when the tenant is created. The account number is carried in the Internet access data of the tenant. The tenant distributor extracts the tenant account number from the Internet access data, and sends the Internet access data to the mirror instance for Internet access behavior corresponding to the tenant account number.

In another application scenario, the Internet access data of the tenant is sent to the tenant distributor through the L2TP tunnel. The Tunnel ID and the Session ID in the L2TP protocol message uniquely correspond to the L2TP dial-up account number. After the L2TP dial-up succeeds, the tenant distributor 220 distinguishes different tenants according to the Tunnel ID and the Session ID. That is, the Tunnel ID and the Session ID are used as the tenant identifier.

In another application scenario of the present application, the Internet access data of the tenant is sent to the tenant distributor through the VPDN tunnel. VPDN is based on the L2TP protocol. Therefore, the VPDN tunnel, like the L2TP tunnel, also uses the Tunnel ID and Session ID as the tenant identifier.

In another application scenario of this application, the Internet access data of the tenant is sent to the tenant distributor through the GRE tunnel. The tenant is distinguished according to the secret key KEY in the GRE protocol message, that is, the secret key KEY is used as the tenant identifier.

In step S903, the Internet access data is distributed to the mirror instance for Internet access behavior management corresponding to the tenant.

In this embodiment, the tenant distributor realizes the isolation of Internet access data between tenants by distributing the Internet access data, which improves security.

A method for Internet access behavior management, which is applied to the above system, is also provided in another aspect of this application. The process is illustrated in Figure 10 and includes steps S1001 to S1002.

In step S1001, the mirror instance for Internet access behavior management receives the Internet access data of the tenant distributed by the tenant distributor.

In an embodiment of this application, one tenant uniquely corresponds to one mirror instance for Internet access behavior management.

In step S1002, the service of Internet access behavior management of the tenant is implemented according to the received Internet access data.

After receiving the Internet access data, the mirror instance for Internet access behavior management may analyze and process the Internet access data according to a manner preset by the tenant, for example, analyze traffic usage of the tenant, record an access record of the tenant. The Internet access behavior management of the tenant is implemented based on these analysis and processing.

During processing, each mirror instance for Internet access behavior management only analyzes the Internet access data of the tenant corresponding to the mirror instance. Because of a role of the tenant distributor, the Internet access data of other tenants will not be sent to the mirror instance for Internet access behavior management. Therefore, the isolation of Internet access data of tenants is realized.

In addition, the mirror instance for Internet access behavior management also includes a management rule for this tenant. According to the rule, the mirror instance for Internet access behavior management realizes control plane isolation, traffic isolation, authority isolation, security policy isolation, and log isolation among multiple tenants.

In another application scenario of this application, the mirror instance for Internet access behavior management may also implement functions such as web filtering, application control, P2P application identification, bandwidth management, content filtering, HTTPS encryption filtering, online user management, and identification and authentication, thereby improving the Internet access behavior management of the tenant.

A method for managing a mirror instance for Internet access behavior management, which is applied to the tenant manager in the above system, is further provided in another aspect of this application. A process of this method is illustrated in Figure 11, including steps S1101 to S1102.

In step S1101, a request of adding a new tenant is received, a mirror instance for Internet access behavior management for the new tenant is created on the cloud platform in response to the request, and a communication connection between the tenant distributor and the mirror instance for Internet access behavior management is established.

After receiving the request of adding the new tenant, the mirror instance for Internet access behavior management for the new tenant is create by using the mirror template for Internet access behavior management. Because the mirror instance for Internet access behavior management needs to receive the Internet access data of the tenant, it is necessary to establish a communication connection between the tenant distributor and the mirror instance for Internet access behavior management to ensure normal transmission of Internet access data.

In step S1102, a correspondence relationship between the new tenant and the mirror instance for Internet access behavior management for the new tenant is configured for the tenant distributor.

After the new tenant is added, the correspondence relationship between the mirror instance for Internet access behavior management and the tenant needs to be created in the tenant distributor, so that the tenant distributor can find the tenant after receiving the Internet access data.

Furthermore, the tenant distributor can also assign an account number to the new tenant. The account number can distinguish the new tenant. The account number may be an L2TP dial-up account number. The Tunnel ID and Session ID in the L2TP protocol message uniquely correspond to one L2TP dial-up account number. The tenant establishes an L2TP tunnel with the tenant distributor through the dial-up account number to realize the diversion of the Internet access data of the tenant to the tenant distributor. This account number may also be used as the tenant identifier. The tenant distributor finds the corresponding mirror instance for Internet access behavior management according to the tenant identifier to realize the distribution of Internet access data.

Of course, the tenant identifier in the embodiments of the present application may also be implemented in many other forms. For specific content, refer to the above-mentioned embodiments.

When creating the mirror instance for Internet access behavior management for the new tenant, in order to ensure resource utilization, a parameter of the mirror instance for Internet access behavior management is usually set according to the bandwidth, link and other parameters reported by the tenant, so that the mirror instance for Internet access behavior management can meet requirements for timely and effective processing of the Internet access data of the tenant, without excessive resource allocation for the tenant which results in waste of resources. However, a situation of the tenant is not static, the tenant often expand bandwidth or change a form of link due to business needs, such as replacing the L2TP tunnel with the GRE tunnel. In order to enable the mirror instance for Internet access behavior management to provide a good service to the tenant, it is necessary to dynamically adjust the configuration parameter of the mirror instance for Internet access behavior management.

For example, when creating a new tenant, the bandwidth of the tenant is 20M, and the tenant expands to 50M in the second year, then the bandwidth of the mirror instance for Internet access behavior management corresponding to the tenant is adjusted to 50M through the operation interface provided by the tenant manager. After receiving an adjustment instruction, the tenant manager schedules more resources to the mirror instance for Internet access behavior management for using, thereby realizing dynamic adjustment of the parameters of the mirror instance for Internet access behavior management.

When the tenant actively ends a lease relationship, or when lease time of the tenant expires, or the tenant manager finds that some tenants have bad records, such as defaulting on payment, the tenant manager can log off the corresponding tenant. The tenant manager deletes the tenant account number from a tenant list, and releases the resources occupied by the mirror instance for Internet access behavior management corresponding to the tenant.

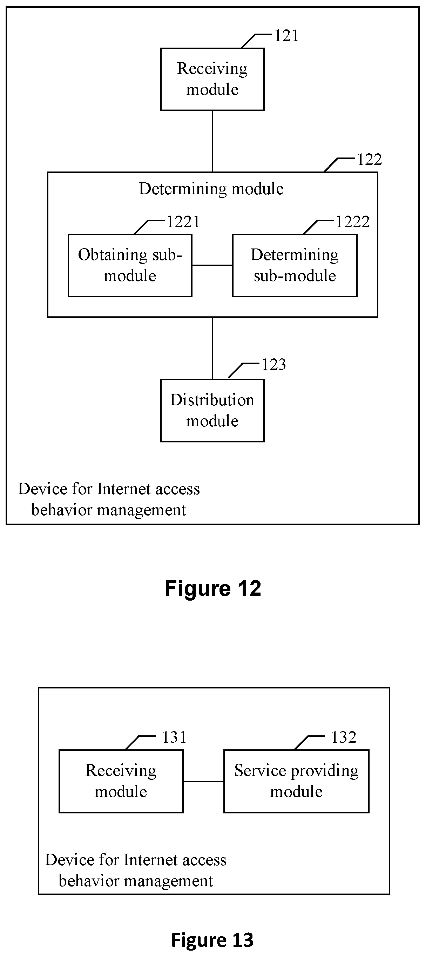

Figure 12 is a structural schematic diagram of a device for Internet access behavior management disclosed in the present disclosure. The device includes a receiving module 121, a determining module 122, and a distribution module 123.

The receiving module 121 is configured to receive the Internet access data of the tenant.

The determining module 122 is configured to determine the mirror instance for Internet access behavior management corresponding to the tenant.

The distribution module 123 is configured to distribute the Internet access data to the mirror instance for Internet access behavior management corresponding to the tenant, where the Internet access data is a basis for the mirror instance for Internet access behavior management to implement the service of Internet access behavior management of the tenant.

The receiving module 121 is specifically configured to:
receive the Internet access data of the tenant transmitted according to the pre-configured diversion tunnel,
receive the Internet access data sent through the L2TP tunnel or GRE tunnel, where the Internet access data is distributed to the L2TP tunnel or GRE tunnel via the router PBR.

The determining module 122 includes: an obtaining sub-module 1221 and a determining sub-module 1222.

The obtaining sub-module 1221 is configured to obtain the tenant identifier corresponding to the Internet access data.

The determining sub-module 1222 is configured to determine the mirror instance for Internet access behavior management corresponding to the tenant identifier.

A workflow of the device for Internet access behavior management disclosed in this embodiment may refer to the method embodiment illustrated in Figure 9, and the specific content is not repeated here.

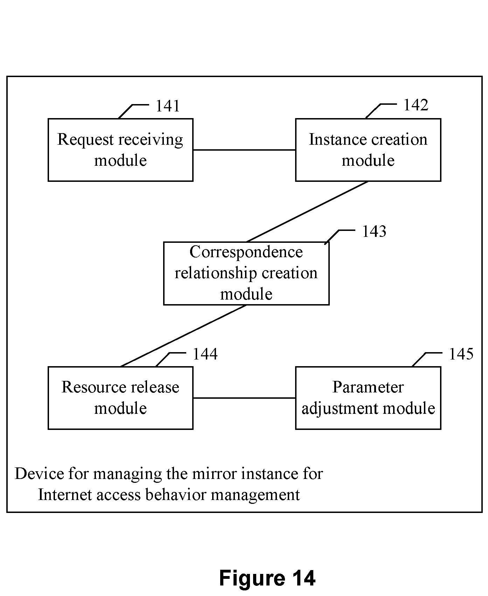

Figure 13 is a structural schematic diagram of another device for Internet access behavior management disclosed in the present disclosure. The device includes a receiving module 131 and a service providing module 132.

The receiving module 131 is configured to receive the Internet access data of the tenant distributed by the tenant distributor.

The service providing module 132 is configured to implement the service of Internet access behavior management of the tenant according to the received Internet access data.

A workflow of the device for Internet access behavior management disclosed in this embodiment may refer to the method embodiment illustrated in Figure 10, and the specific content is not repeated here.

Figure 14 is a schematic diagram of a device for managing the mirror instance for Internet access behavior management disclosed in the present disclosure. The device includes a request receiving module 141, an instance creation module 142, and a correspondence relationship creation module 143.

The request receiving module 141 is configured to receive the request of adding the new tenant.

The instance creation module 142 is configured to create the mirror instance for Internet access behavior management for the new tenant on the cloud platform in response to the request, and establish the communication connection between the tenant distributor and the mirror instance for Internet access behavior management.

The correspondence relationship creation module 143 is configured to configure, for the tenant distributor, the correspondence relationship between the new tenant and the mirror instance for Internet access behavior management created for the new tenant.

The request receiving module is further configured to receive a request of cancelling a tenant.

The device further includes a resource release module 144 configured to release a cloud platform resource occupied by the mirror instance for Internet access behavior management corresponding to the tenant in response to the request.

The device further includes a parameter adjustment module 145 configured to adjust the parameter of the mirror instance for Internet access behavior management.

A workflow of the device for Internet access behavior management disclosed in this embodiment may refer to the method embodiment illustrated in Figure 11, and the specific content is not repeated here.

In another aspect, a device for Internet access behavior management, which is used to implement the function of the tenant distributor, is further provided in the present application. The device may include a processor and a memory. Where programs are stored in the memory; the processor executes the programs in the memory to implement the following steps:
receiving the Internet access data of the tenant;
determining the mirror instance for Internet access behavior management corresponding to the tenant; and
distributing the Internet access data to the mirror instance for Internet access behavior management corresponding to the tenant, where the Internet access data is the basis for the mirror instance for Internet access behavior management to implement the service of Internet access behavior management of the tenant.

In another aspect, another device for Internet access behavior management, which is used to implement the function of the mirror instance for Internet access behavior management, is further provided in the present application. The device may include a processor and a memory. Where programs are stored in the memory; the processor executes the programs in the memory to implement the following steps:
receiving the Internet access data of the tenant distributed by the tenant distributor; and
implementing the service of Internet access behavior management of the tenant according to the received Internet access data.

In another aspect, another device for Internet access behavior management, which is used to implement the function of the mirror instance for Internet access behavior management, is further provided in the present application. The device may include a processor and a memory. Where programs are stored in the memory; the processor executes the programs in the memory to implement the following steps:
receiving the request of adding a new tenant, creating the mirror instance for Internet access behavior management for the new tenant on the cloud platform in response to the request, and establishing the communication connection between the tenant distributor and the mirror instance for Internet access behavior management; and
configuring for the tenant distributor the correspondence relationship between the new tenant and the mirror instance for Internet access behavior management created for the new tenant.

The processor in this application may be a CPU, or an MCU, or, may be a combination of a CPU and an MCU.

The memory may include a non-permanent memory, a random access memory (RAM), and/or a non-volatile memory in a computer readable medium, such as a read-only memory (ROM) or a flash memory (flash RAM). The memory includes at least one Memory chip.

A storage medium executable by a computing device is further provided in the present application, the storage medium stores a program that, when executed by the computing device, implements the method for Internet access behavior management provided by any of the foregoing embodiments.

Another storage medium executable by a computing device is further provided in the present disclosure, and the storage medium stores a program that, when executed by the computing device, implements the method for managing the mirror instance for Internet access behavior management provided by any of the foregoing embodiments.

For the foregoing method embodiments, for the sake of simple description, they are all expressed as a series of action combinations, but those skilled in the art should know that the present invention is not limited by the described sequence of actions, because according to the present invention, some steps can be performed in other order or simultaneously. Secondly, those skilled in the art should also know that the embodiments described in the specification are all preferred embodiments, and the involved actions and modules are not necessarily required by the present invention.

It should be noted that the above embodiments in this specification are described in a progressive manner. Each of the embodiments is mainly focused on describing its differences from other embodiments, and references may be made among these embodiments with respect to the same or similar portions among these embodiments. Since device embodiments are similar to method embodiments, the description thereof is relatively simple, and reference may be made to the description of the method embodiments for relevant parts.

The steps in the method of each embodiment of the present disclosure can be adjusted, merged, and deleted in order according to actual needs.

The modules and sub-modules in the devices and terminals of the embodiments of the present disclosure can be adjusted, merged, and deleted in order according to actual needs.

In the several embodiments provided in the present disclosure, it should be understood that the disclosed terminal, device, and method may be implemented in other ways. For example, the terminal embodiments described above are only illustrative. For example, the division of modules or sub-modules is only a logical function division. In actual implementation, there may be other division modes, for example, multiple sub-modules or modules may be combined or integrated into another module, or some features can be ignored or not implemented. In addition, the displayed or discussed mutual coupling or direct coupling or communication connection may be indirect coupling or communication connection through some interfaces, devices or modules, and may be in electrical, mechanical or other forms.

The modules or sub-modules described as separate components may or may not be physically separate, and the components as modules or sub-modules may or may not be physical modules or sub-modules, that is, they may be located in one place, or they may be distributed to multiple network modules or sub-modules. Some or all of the modules or sub-modules may be selected according to actual needs to achieve the objectives of the solutions of the embodiments.

In addition, each functional module or sub-module in each embodiment of the present disclosure may be integrated into one processing module, or each module or sub-module may exist alone physically, or two or more modules or sub-modules may be integrated in one module. The above-mentioned integrated modules or sub-modules can be implemented in the form of hardware or software functional modules or sub-modules.

For example, the mirror template for Internet access behavior management, the tenant distributor, and the tenant manager contained in the system for Internet access behavior management may be integrated into a single module, or according to the special needs of the actual situation, the mirror template for Internet access behavior management, the tenant distributor, and the tenant manager are set in different modules under the distributed architecture based on the cloud platform, and there is no specific limitation here.

In a specific embodiment of the present disclosure, the tenant distributor is separately deployed on the cloud platform, and the mirror template for Internet access behavior management and the tenant manager are integrated into one device for Internet access behavior management. Of course, according to actual needs, the tenant manager may also be set separately from the mirror template for Internet access behavior management.

## Claims

1. A system for Internet access behavior management comprising:
a mirror template (210) for Internet access behavior management configured to create a mirror instance for Internet access behavior management corresponding to each of one or more tenants, to implement service of Internet access behavior management of the tenant by the mirror instance for Internet access behavior management corresponding to the tenant;
a tenant distributor (220) configured to receive Internet access data of the tenant, obtain a tenant identifier corresponding to the Internet access data, determine the mirror instance for Internet access behavior management corresponding to the tenant identifier, and distribute the Internet access data to the mirror instance for Internet access behavior management corresponding to the tenant identifier, wherein the tenant identifier comprises: at least one of an account number assigned by a tenant manager to the tenant, an IP address of the tenant, and an identifier of a tunnel through which the Internet access data of the tenant is sent; and
the tenant manager (230) configured to provide the tenant with, but not limited to, account opening service, dynamic expansion service, and account cancellation service;
a diversion terminal (310) configured to divert the Internet access data of the tenant to the tenant distributor according to a pre-configured diversion tunnel; wherein the diversion tunnel comprises a Layer Two Tunneling Protocol, L2TP, tunnel or a Generic Routing Encapsulation, GRE, tunnel; and the diversion terminal (310) is further configured to distribute the Internet access data of the tenant to the L2TP tunnel or the GRE tunnel through Policy Based Routing, PBR, of a router, and divert the Internet access data of the tenant to the tenant distributor through the L2TP tunnel or the GRE tunnel.

2. The system for Internet access behavior management according to claim 1, wherein the mirror instance for Internet access behavior management comprises: a management rule, wherein the management rule is used to achieve control plane isolation, traffic isolation, authority isolation, security policy isolation, and log isolation between tenants.

3. The system for Internet access behavior management according to claim 2, wherein the tenant distributor (220) is deployed on a cloud platform.

4. The system for Internet access behavior management according to claim 1, wherein the tenant distributor (220) is deployed in a gateway for sending the Internet access data.

5. A device for Internet access behavior management comprising:
a receiving module (121) configured to receive Internet access data of a tenant;
a determining module (122) configured to obtain a tenant identifier corresponding to the Internet access data and determine a mirror instance for Internet access behavior management corresponding to the tenant identifier, wherein the tenant identifier comprises: at least one of an account number assigned to the tenant, an IP address of the tenant, and an identifier of the tunnel through which the Internet access data of the tenant is sent; and
a distribution module (123) configured to distribute the Internet access data to the mirror instance for Internet access behavior management corresponding to the tenant, wherein the Internet access data is a basis for the mirror instance for Internet access behavior management to implement service of Internet access behavior management of the tenant;
the receiving module (121) is specifically configured to receive the Internet access data sent through a pre-configured diversion tunnel that includes
a Layer Two Tunneling Protocol, L2TP, tunnel or a Generic Routing Encapsulation, GRE, tunnel, wherein the Internet access data is distributed to the L2TP tunnel or the GRE tunnel through a Policy Based Routing, PBR, of a router.

## Patentansprüche

1. Ein System zur Verwaltung des Internetzugangsverhaltens, umfassend:
eine Spiegelvorlage (210) für die Verwaltung des Internetzugangsverhaltens, die so konfiguriert ist, dass sie eine Spiegelinstanz für die Verwaltung des Internetzugangsverhaltens erzeugt, die jedem von einem oder mehreren Hausbewohnern entspricht, um den Dienst der Verwaltung des Internetzugangsverhaltens des Hausbewohners durch die dem Hausbewohner entsprechende Spiegelinstanz für die Verwaltung des Internetzugangsverhaltens zu implementieren;
einen Hausbewohnerverteiler (220), der so konfiguriert ist, dass er Internetzugangsdaten des Hausbewohners empfängt, eine Hausbewohnerkennung, die den Internetzugangsdaten entspricht, erhält, die Spiegelinstanz für die Verwaltung des Internetzugangsverhaltens, die der Hausbewohnerkennung entspricht, bestimmt und die Internetzugangsdaten an die Spiegelinstanz für die Verwaltung des Internetzugangsverhaltens, die der Hausbewohnerkennung entspricht, verteilt, wobei die Hausbewohnerkennung Folgendes umfasst: mindestens eine Kontonummer, die dem Hausbewohner von einem Hausbewohnermanager zugewiesen wird, eine IP-Adresse des Hausbewohners und eine Kennung eines Tunnels, durch den die Internetzugangsdaten des Hausbewohners gesendet werden; und
der Hausbewohnermanager (230), der so konfiguriert ist, dass er dem Hausbewohner unter anderem einen Kontoeröffnungsdienst, einen dynamischen Erweiterungsdienst und einen Kontokündigungsdienst zur Verfügung stellt;
ein Umleitungsterminal (310), das so konfiguriert ist, dass es die Internetzugangsdaten des Hausbewohners gemäß einem vorkonfigurierten Umleitungstunnel an den Hausbewohnerverteiler umleitet; wobei der Umleitungstunnel einen Layer Two Tunneling Protocol, L2TP, -Tunnel oder einen Generic Routing Encapsulation, GRE, -Tunnel umfasst; und das Umleitungsterminal (310) ferner so konfiguriert ist, dass es die Internetzugangsdaten des Hausbewohners an den L2TP-Tunnel oder den GRE-Tunnel durch Policy Based Routing (PBR) eines Routers verteilt und die Internetzugangsdaten des Hausbewohners an den Hausbewohnerverteiler durch den L2TP-Tunnel oder den GRE-Tunnel umleitet.

2. System zur Verwaltung des Internetzugangsverhaltens nach Anspruch 1, wobei die Spiegelinstanz für die Verwaltung des Internetzugangsverhaltens Folgendes umfasst: eine Verwaltungsregel, wobei die Verwaltungsregel verwendet wird, um eine Isolierung der Steuerebene, eine Isolierung des Datenverkehrs, eine Isolierung der Befugnisse, eine Isolierung der Sicherheitsrichtlinien und eine Isolierung der Protokolle zwischen Hausbewohnern zu erreichen.

3. System zur Verwaltung des Internetzugangsverhaltens nach Anspruch 2, wobei der Hausbewohnerverteiler (220) auf einer Cloud-Plattform eingesetzt wird.

4. System zur Verwaltung des Internetzugangsverhaltens nach Anspruch 1, wobei der Hausbewohnerverteiler (220) in einem Gateway zum Senden der Internetzugangsdaten eingesetzt wird.

5. Eine Vorrichtung zur Verwaltung des Internetzugangsverhaltens, umfassend:
ein Empfangsmodul (121), das so konfiguriert ist, dass es die Internetzugangsdaten eines Hausbewohners empfängt;
ein Bestimmungsmodul (122), das so konfiguriert ist, dass es eine Hausbewohnerkennung entsprechend den Internetzugangsdaten erhält und eine Spiegelinstanz für die Verwaltung des Internetzugangsverhaltens entsprechend der Hausbewohnerkennung bestimmt, wobei die Hausbewohnerkennung Folgendes umfasst: mindestens eine dem Hausbewohner zugewiesene Kontonummer, eine IP-Adresse des Hausbewohners und eine Kennung des Tunnels, durch den die Internetzugangsdaten des Hausbewohners gesendet werden; und
ein Verteilungsmodul (123), das so konfiguriert ist, dass es die Internetzugangsdaten an die Spiegelinstanz für die Verwaltung des Internetzugangsverhaltens, die dem Hausbewohner entspricht, verteilt, wobei die Internetzugangsdaten eine Grundlage für die Spiegelinstanz für die Verwaltung des Internetzugangsverhaltens sind, um den Dienst der Verwaltung des Internetzugangsverhaltens des Hausbewohners zu implementieren;
das Empfangsmodul (121) ist speziell konfiguriert, um die Internetzugangsdaten zu empfangen, die durch einen vorkonfigurierten Umleitungstunnel gesendet werden, der einen Layer Two Tunneling Protocol, L2TP, -Tunnel oder einen Generic Routing Encapsulation, GRE, -Tunnel enthält, wobei die Internetzugangsdaten durch ein Policy Based Routing (PBR) eines Routers an den L2TP-Tunnel oder den GRE-Tunnel verteilt werden.

## Revendications

1. Système de gestion de comportement d'accès à Internet comprenant :
un modèle de miroir (210) pour une gestion de comportement d'accès à Internet configuré pour créer une instance miroir pour une gestion de comportement d'accès à Internet correspondant à chacun desdits un ou plusieurs locataires, pour mettre en œuvre un service de gestion de comportement d'accès à Internet du locataire via l'instance miroir pour une gestion de comportement d'accès à Internet correspondant au locataire ;
un distributeur de locataire (220) configuré pour recevoir des données d'accès à Internet du locataire, obtenir un identifiant de locataire correspondant aux données d'accès à Internet, déterminer l'instance miroir pour une gestion de comportement d'accès à Internet correspondant à l'identifiant de locataire, et distribuer les données d'accès à Internet à l'instance miroir pour une gestion de comportement d'accès à Internet correspondant à l'identifiant de locataire, l'identifiant de locataire comprenant: l'un au moins d'un numéro de compte attribué par un gestionnaire de locataire au locataire, d'une adresse IP du locataire, et d'un identifiant d'un tunnel à travers lequel sont envoyées les données d'accès à Internet du locataire; et
le gestionnaire de locataire (230) configuré pour fournir au locataire, mais sans s'y limiter, un service d'ouverture de compte, un service d'extension dynamique, et un service d'annulation de compte ;
un terminal de dérivation (310) configuré pour détourner les données d'accès à Internet du locataire vers le distributeur de locataire selon un tunnel de dérivation préconfiguré ; dans lequel le tunnel de dérivation comprend un tunnel de protocole de tunnellisation de couche deux (L2TP, Layer Two Tunneling Protocol) ou un tunnel d'encapsulation générique de routage (GRE, Generic Routing Encapsulation) ; et le terminal de dérivation (310) est en outre configuré pour distribuer les données d'accès à Internet du locataire au tunnel L2TP ou au tunnel GRE via un routage basé sur des politiques (PBR, Policy Based Routing) d'un routeur, et pour détourner les données d'accès à Internet du locataire vers le distributeur de locataire via le tunnel L2TP ou le tunnel GRE.

2. Système de gestion de comportement d'accès à Internet selon la revendication 1, dans lequel l'instance miroir pour la gestion de comportement d'accès à Internet comprend : une règle de gestion, la règle de gestion étant utilisée pour réaliser une isolation de plan de commande, une isolation de trafic, une isolation d'autorité, une isolation de politique de sécurité et une isolation de journal entre des locataires.

3. Système de gestion de comportement d'accès à Internet selon la revendication 2, dans lequel le distributeur de locataire (220) est déployé sur une plate-forme cloud.

4. Système de gestion de comportement d'accès à Internet selon la revendication 1, dans lequel le distributeur de locataire (220) est déployé dans une passerelle pour envoyer les données d'accès à Internet.

5. Dispositif de gestion de comportement d'accès à Internet comprenant :
un module de réception (121) configuré pour recevoir des données d'accès à Internet d'un locataire ;
un module de détermination (122) configuré pour obtenir un identifiant de locataire correspondant aux données d'accès à Internet et pour déterminer une instance miroir pour une gestion de comportement d'accès à Internet correspondant à l'identifiant de locataire, dans lequel l'identifiant de locataire comprend : l'un au moins d'un numéro de compte attribué au locataire, d'une adresse IP du locataire, et d'un identifiant du tunnel à travers lequel sont envoyées les données d'accès à Internet du locataire ; et
un module de distribution (123) configuré pour distribuer les données d'accès à Internet à l'instance miroir pour une gestion de comportement d'accès à Internet correspondant au locataire, dans lequel les données d'accès à Internet sont une base pour l'instance miroir pour une gestion de comportement d'accès à Internet afin de mettre en œuvre un service de gestion de comportement d'accès à Internet du locataire ;
le module de réception (121) étant en particulier configuré pour recevoir les données d'accès à Internet envoyées à travers un tunnel de dérivation préconfiguré qui inclut un tunnel de protocole de tunnellisation de couches deux (L2TP, Layer Two Tunneling Protocol) ou un tunnel d'encapsulation générique de routage (GRE, Generic Routing Encapsulation), les données d'accès à Internet étant distribuées au tunnel L2TP ou au tunnel GRR via un routage basé sur des politiques (PBR, Policy Based Routing), d'un routeur.
